# EUROPÄISCHE PATENTSCHRIFT

(11) **EP 2 233 417 B1**
(45) Veröffentlichungstag und Bekanntmachung des Hinweises auf die Patenterteilung: **08.05.2013**
(21) Anmeldenummer: 10157152.9
(22) Anmeldetag: 22.03.2010
(51) Int. Cl.: B65H 27/00, B65H 20/12, F16J 15/44

(54) **Vorrichtung und Verfahren zum Einstellen der Breite eines Saugspaltes zwischen einer drehbaren Saugwalze und einem feststehenden Saugluftsteuerventil**
Device and method for setting the width of a suction gap between a rotatable suction roller and a fixed suction air control valve
Dispositif et procédé de réglage de la largeur d'une colonne d'aspiration entre un cylindre d'aspiration rotatif et une soupape de commande d'air d'aspiration fixe

(30) Priorität: 23.03.2009 DE 102009014456
(43) Veröffentlichungstag der Anmeldung: 29.09.2010
(73) Patentinhaber: Winkler + Dünnebier GmbH, 56564 Neuwied (DE)
(72) Erfinder: Seger, Reiner, 56566, Neuwied (DE)
(74) Vertreter: Müller, Gerald Christian

(56) Entgegenhaltungen:
- EP-A2- 1 643 171
- DE-A1- 3 241 869

## Beschreibung

### I. Anwendungsgebiet

Die vorliegende Erfindung betrifft eine Vorrichtung sowie ein Verfahren zum Einstellen der Breite eines Saugspaltes zwischen einer drehbaren Saugwalze und einem feststehenden Saugluftsteuerventil, das zum Steuern der Beaufschlagung der Saugwalze mit Saug- oder Druckluft dient. Vorrichtungen bzw. Saugwalzen der in Rede stehenden Art werden insbesondere in Maschinen zur Herstellung von Briefhüllen, Hygieneprodukten und Kartonagen eingesetzt.

### II. Technischer Hintergrund

Aus der DE 198 41 834 A1 ist eine als Messerwalze fungierende Saugwalze mit in Axialrichtung verlaufenden Saugkanälen 21 sowie mit von diesen in Radialrichtung abzweigenden Saugkanälen 11 bekannt. In Fig. 3 der vorgenannten Druckschrift ist außerdem ein mit Saugluftsteuerkanälen versehenes Saugluftsteuerventil 31 gezeigt, das zur Gewährleistung einer guten Zugänglichkeit und Wartungsfreundlichkeit hufeisenförmig ausgebildet ist. Dieses Saugluftsteuerventil 31 ist mit Hilfe einer Distanz- und Zentrierbuchse 32 an einer Gestellwand 18 der Maschine gelagert.

Bei der bekannten Saugwalze befindet sich zwischen dem Walzenkörper 19 und dem Saugluftsteuerventil 31 ein in Fig. 3 nicht zu erkennender sogenannter Saugspalt, der verhindert, dass sich der rotierende Walzenkörper 19 und das feststehende Saugluftsteuerventil 31 unmittelbar berühren. Der Saugspalt führt naturgemäß dazu, dass Saugluft nicht nur bestimmungsgemäß durch die Saugkanäle 11 und 21 angesaugt wird, sondern auch Umgebungsluft durch den Saugspalt hindurch in die Saugluftsteuerkanäle des Saugluftsteuerventils 31 gelangt. Die durch den Saugspalt eingesaugte Luft stellt an sich unerwünschte Fehlluft dar, die zur Folge hat, dass das maschinenseitig vorgesehene Saugpumpensystem zum Erzeugen derselben Saugkraft auf der Mantelfläche der Saugwalze mehr Energie verbraucht als in dem Fall, in welchem keine Fehlluft auftritt. Es besteht daher das Bestreben, die Breite des Saugspaltes möglichst minimal zu halten.

Bei der aus der DE 198 41 834 A1 bekannten Saugwalze wird die Breite des Saugspaltes im Rahmen der Herstellung der die Saugwalze enthaltenden Maschine bei dem Maschinenhersteller eingerichtet. Hierbei werden die einander zugewandten Stirnflächen des Saugluftsteuerventils 31 einerseits und des Walzenkörpers 19 andererseits derart auf Maß geschliffen, dass ein minimaler Saugspalt entsteht.

Bei dem späteren Betreiber der Maschine kommt es häufig vor, dass sich die Breite des Saugspaltes aus verschiedensten Gründen verändert. Um in derartigen Fällen wieder die gewünschte Breite des Saugspaltes herzustellen, muss der Betreiber der Maschine meist das Saugluftsteuerventil 31 austauschen und deren dem Walzenkörper 19 zugewandte Stirnseite zuvor auf Maß schleifen. Die für diese Bearbeitung des Saugluftsteuerventils 31 erforderliche maschinelle Ausrüstung ist bei dem Betreiber meist nicht vorhanden, so dass für die Korrektur der Breite des Saugspaltes der Maschinenhersteller eingeschaltet werden muss.

Die aus der DE-A-32 41 869 bekannte Vorrichtung dient der Saugluftsteuerung in einem umlaufenden Saugzylinder mittels eines dazu koaxial gelagerten und drehfesten Steuerkopfes von kegeliger Grundform, der passgenau in den Saugzylinder eintaucht. Die beiden kooperierenden Steuerflächen liegen dabei auf dem Außenkegelmantel des Steuerkopfes und auf dem Innenkegelmantel des Saugzylinders.

Aus der EP-A-1 643 171 ist eine Vorrichtung zum Einstellen einer Spaltdichtung zwischen zwei sich relativ zueinander bewegenden Bauteilen bekannt. Sie weist zwei parallele Dichtflächen auf, die vor der erstmaligen Bewegung ohne Spalt in Anlage aneinander gebracht werden. In der sich anschließenden Anlaufphase der Bewegung der Dichtflächen wird dann ein Spalt durch das gezielte Abnutzen einer der Dichtflächen selbst auf das kleinstmögliche Maß eingestellt.

### III. Darstellung der Erfindung

### a) Technische Aufgabe

Es ist daher die Aufgabe der vorliegenden Erfindung, eine Vorrichtung und ein Verfahren zum Einstellen der Breite eines Saugspaltes zwischen einer drehbaren Saugwalze und einem feststehenden Saugluftsteuerventil zu schaffen, die bzw. das es dem Betreiber der die Saugwalze enthaltenden Maschine ermöglicht, die Breite des Saugspaltes vor Ort nachträglich auf eine Sollbreite einzustellen.

### b) Lösung der Aufgabe

Diese Aufgabe wird mittels einer Vorrichtung mit den Merkmalen der Ansprüche 1 oder 4 bzw. mittels eines Verfahrens mit den Merkmalen der Ansprüche 6 oder 8 gelöst. Weitere Ausgestaltungen der vorliegenden Erfindung ergeben sich aus den Unteransprüchen.

Erfindungsgemäß wird eine Vorrichtung zum Einstellen der Breite eines Saugspaltes zwischen einer drehbaren Saugwalze und einem feststehenden Saugluftsteuerventil vorgeschlagen, das zum Steuern der Beaufschlagung der Saugwalze mit Saug- oder Druckluft dient. Die hauptsächliche Funktion der in Rede stehenden Saugwalze besteht darin, auf ihrer Mantelfläche über bestimmte Umfangswinkel hinweg eine Saugwirkung zum Halten von Papierzuschnitten, Briefhüllenzuschnitten, Kartonagezuschnitten, Kartonagebögen, Bestandteilen von gefalteten oder ungefalteten Hygieneprodukten oder ähnlichem zu erzeugen. Wie in der DE 198 41 834 A1 ist jedoch auch denkbar, zumindest aus bestimmten Bereichen der Mantelfläche Druckluft auszublasen, um beispielsweise Fenstermaterialausschnitte im Rahmen der Herstellung von Briefhüllen in einen Abfalltrichter zu befördern oder die Saugbohrungen zu reinigen. Die nachfolgend verwendeten Begriffe Saugspalt, Saugwalze und Saugluftsteuerventil sind daher nicht auf die Funktionalität der Erzeugung einer Saugwirkung beschränkt, sondern im Sinne der vorliegenden Erfindung auch dahingehend zu verstehen, dass sie alternativ eine durch Druckluft hervorgerufene Druckwirkung erzeugen können.

Die erfindungsgemäße Vorrichtung umfasst eine in Axialrichtung der Saugwalze verschiebbare Lagerbuchse, die relativ zu der Saugwalze wenigstens in einer Betriebsstellung axial fixierbar ist, in welcher der Saugspalt im Betrieb der Saugwalze eine vorgegebene Sollbreite aufweist. Darüber hinaus ist eine Passplatte mit veränderbarer Dicke vorgesehen, die an der axial verschiebbaren Lagerbuchse lösbar befestigbar ist. Die Befestigung der Passplatte an der Lagerbuchse kann unmittelbar oder mittelbar erfolgen. Das Saugluftsteuerventil ist auf der der Lagerbuchse abgewandten Seite der Passplatte vorzugsweise lösbar sowie unmittelbar oder mittelbar an der Passplatte befestigbar.

Der Saugspalt zwischen der Saugwalze und dem Saugluftsteuerventil ist somit dadurch auf die Sollbreite einstellbar, dass zunächst die Lagerbuchse, die Passplatte und das Saugluftsteuerventil aneinander befestigt werden und dadurch eine Baugruppe bilden. Durch axiales Verschieben dieser Baugruppe in Richtung Saugwalze kann dann das Saugluftsteuerventil mit seiner der Passplatte abgewandten Stirnseite in spielfreie Anlage an die Saugwalze gebracht werden. Daraufhin wird die Lagerbuchse in ihrer dann eingenommenen Lage axial fixiert, so dass sie nicht mehr verschiebbar ist. Nach dem Demontieren der Baugruppe können die Passplatte sowie das Saugluftsteuerventil entfernt und die Dicke der Passplatte kann um die gewünschte Sollbreite des Saugspaltes verringert werden. Nach dem Einbau der Passplatte mit der um die Sollbreite verringerten Dicke und dem Saugluftsteuerventil entsteht auf diese Weise zwischen der Saugwalze und dem Saugluftsteuerventil der Saugspalt mit der gewünschten Sollbreite. Diejenige Lage, in welcher die Lagerbuchse zuvor axial fixiert wurde, entspricht folglich ihrer Betriebsstellung.

Der Vorteil der vorliegenden Erfindung besteht darin, dass der Betreiber der die Saugwalze enthaltenden Maschinen, beispielsweise eine Briefhüllenherstellungsmaschine, eine Kartonagenherstellungsmaschine oder eine Hygieneproduktherstellungsmaschine, die Breite des Saugspaltes nachträglich vor Ort in seiner Maschinenhalle beliebig einstellen bzw. nachstellen kann. Eine mechanische Nachbearbeitung des Saugluftsteuerventils durch Schleifen - ggf. im Hause des Maschinenherstellers - ist nicht mehr erforderlich, so dass das nachträgliche Einstellen der Breite des Saugspaltes unmittelbar von dem Maschinenbediener im Hause des Betreibers der Maschine sehr zeitsparend vorgenommen werden kann. Ein weiterer Vorteil besteht darin, dass die Bestandteile der erfindungsgemäßen Vorrichtung auch bei herkömmlichen Saugwalzen nachgerüstet werden können, die keine Vorrichtung zum Einstellen der Breite des Saugspaltes aufweisen.

In vorteilhafter Weise handelt es sich bei der Passplatte um ein schälbares Schichtblech, das aus mehreren geschichteten Metallfolien mit vorzugsweise jeweils gleicher Dicke besteht. Die Metallfolien, beispielsweise Stahl- oder Aluminiumfolien, lassen sich insbesondere einzeln von dem Schichtblech abschälen bzw. abziehen. Die Dicke der Metallfolien kann bei derartigen Schichtblechen sehr dünn sein, beispielsweise 0,05 mm. Dadurch wird eine entsprechend geringe Einstellung der Sollbreite des Saugspaltes möglich.

Vorteilhaft ist es, eine Halteplatte zum Halten der Passplatte vorzusehen. Die Halteplatte ist einerseits an der Lagerbuchse sowie andererseits an dem Saugluftsteuerventil vorzugsweise lösbar befestigbar und hält zwischen sich und dem Saugluftsteuerventil die Passplatte. Sie dient somit der mittelbaren Befestigung der Passplatte an der Lagerbuchse.

Zum Verringern der Dicke der Passplatte um die Sollbreite des Saugspaltes kann die Halteplatte zusammen mit der Passplatte und dem Saugluftsteuerventil ausgebaut werden. Nach dem Ausbauen kann sich die Passplatte noch in an der Halteplatte anliegendem Zustand befinden, so dass die Halteplatte eine sichere Handhabung der Passplatte während des Verringerns der Dicke der Passplatte gewährleistet. Dies gilt insbesondere dann, wenn es sich bei der Passplatte um ein sehr flexibles und in sich wenig stabiles Schichtblech handelt, von welchem eine sehr dünne Metallfolie abgezogen wird.

Des weiteren ist es vorteilhaft, die Lagerbuchse axial verschiebbar auf einem Verbindungsteil zu lagern, welches einerseits in einem Gestellrahmen der Maschine halterbar und in welchem andererseits die Saugwalze mit einem ihrer Wellenzapfen drehbar gelagert werden kann. Das Verbindungsteil bewirkt auf einfache Art und Weise sowohl die Drehlagerung der Saugwalze als auch die Schiebelagerung der das Saugluftsteuerventil tragenden Lagerbuchse.

Alternativ schlägt die vorliegende Erfindung vor, das Saugluftsteuerventil ohne zwischengeschaltete Passplatte an der axial verschiebbar gelagerten Lagerbuchse zu befestigen. Bei einer erfindungsgemäßen Vorrichtung dieser Art kann das Einstellen der Breite des Saugspaltes mit Hilfe eines Abstandselementes erfolgen, das eine der Sollbreite entsprechenden Dicke aufweist. Hierzu wird das Saugluftsteuerventil an der Lagerbuchse befestigt und das Abstandselement wird zwischen die Saugwalze und das Saugluftsteuerventil eingebracht. Die Baugruppe umfassend die Lagerbuchse und das Saugluftsteuerventil wird dann axial in Richtung der Saugwalze verschoben bis das Abstandselement spielfrei zwischen der Saugwalze und dem Saugluftsteuerventil eingepasst ist. Anschließend wird die Lagerbuchse in ihrer dann eingenommenen Lage axial fixiert, so dass sie nicht mehr verschiebbar ist. Schließlich kann das Abstandselement aus dem Saugspalt entfernt werden, so dass zwischen der Saugwalze und dem Saugluftsteuerventil der Saugspalt mit der gewünschten Sollbreite entsteht. Die zuvor eingenommene Lage der Lagerbuchse entspricht somit ihrer Betriebsstellung.

Da es sich bei dem Abstandselement um eine sehr dünne Metallfolie oder Ähnliches handeln muss, erfordert das Einpassen des Abstandselements zwischen die Saugwalze und das Saugluftsteuerventil eine sehr vorsichtige Handhabung des Abstandselements, um die Einstellung des Saugspaltes auf die sehr geringe Sollbreite zu gewährleisten. Vor diesem Hintergrund bietet die erfindungsgemäße Vorrichtung, die von der von der Halteplatte gehaltenen Passplatte Gebrauch macht, Vorteile in der Handhabung.

### c) Ausführungsbeispiel

Nachfolgend wird ein Ausführungsbeispiel der vorliegenden Erfindung beispielhaft anhand der Zeichnungen beschrieben. Es zeigen:
- Fig. 1:: Eine Schnittdarstellung durch eine Ausführungsform der vorlie- genden Erfindung, und
- Fig. 2:: eine vergrößerte Detaildarstellung des unteren Bereichs der in Fig. 1 gezeigten Ausführungsform, in welcher die Breite des Saugspaltes dargestellt ist.

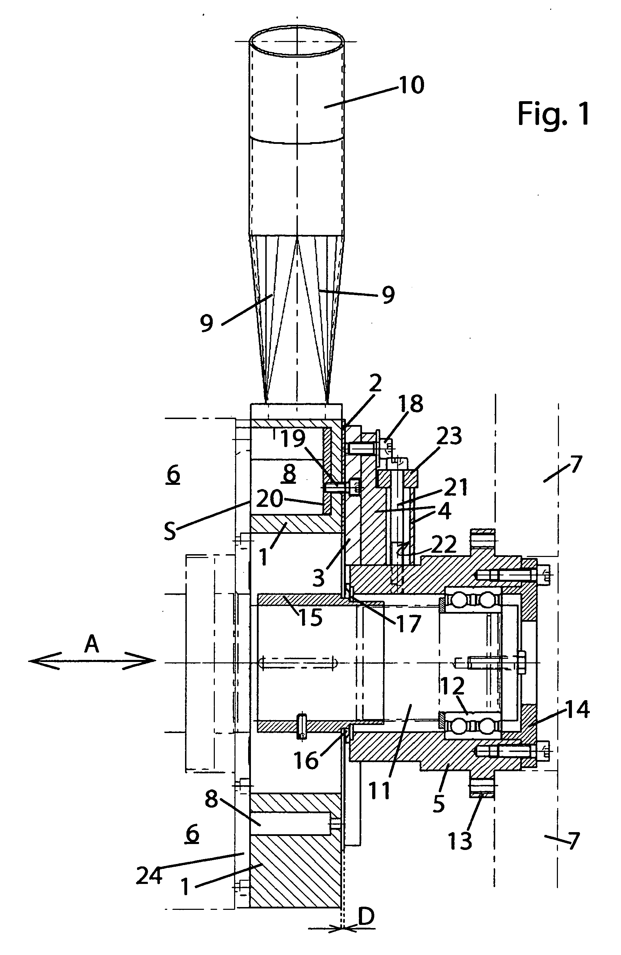

In Fig. 1 ist die Schnittdarstellung einer Ausführungsform der erfindungsgemäßen Vorrichtung gezeigt. Es ist links mit strichpunktierten Linien der zylindrische und hier aus Aluminium bestehende Walzenkörper 6 angedeutet, der in an sich bekannter Weise nicht gezeigte Saugkanäle aufweist, die beispielsweise so ausgebildet sein können, wie sie in den Fig. 3 und 4 der DE 198 41 834 A1 gezeigt sind. An die Stirnseite des Walzenkörpers 6 ist eine aus Stahl bestehende Walzenscheibe 24 angeschraubt, die nicht gezeigte Saugluftdurchgangslöcher aufweist und sich mit dem Walzenkörper 6 mitdreht. Die rotierende Einheit aus Walzenkörper 6 und Walzenscheibe 24 wird bei der gezeigten Ausführungsform nachfolgend als "Saugwalze 6, 24" bezeichnet. Grundsätzlich denkbar ist auch, auf die nicht für die vorliegende Erfindung relevante Walzenscheibe 24 zu verzichten, so dass der Walzenkörper allein die Saugwalze bilden würde.

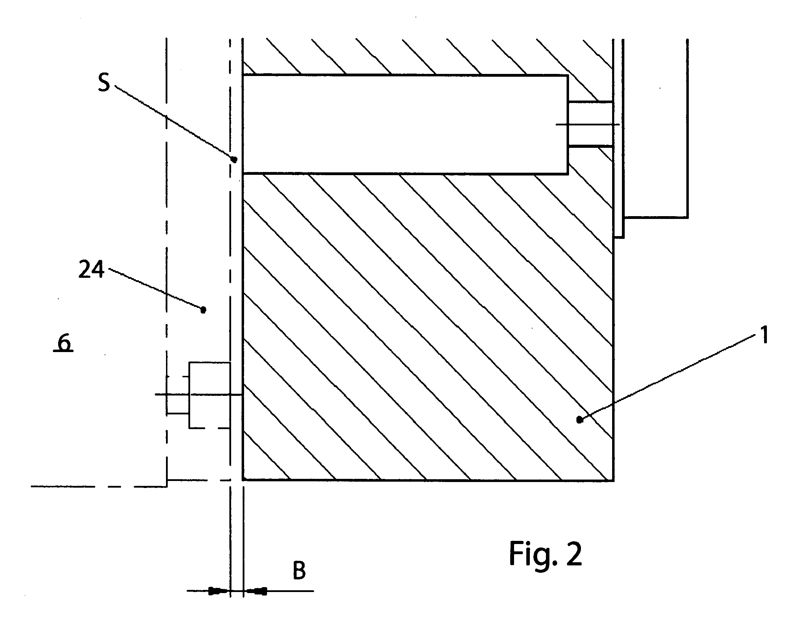

An die Walzenscheibe 24 schließt sich nach rechts der einzustellende Saugspalt S an, der besser in der vergrößerten Darstellung gemäß Fig. 2 zu erkennen ist und die Breite B aufweist. Rechts neben dem Saugspalt S ist das Saugluftsteuerventil 1 zu erkennen, in welchem in an sich bekannter Weise verschiedene Saugluftsteuerkanäle 8 ausgebildet sind. Die Saugluftsteuerkanäle 8 stehen über zwei Ansaugtrichter 9 mit einer Saugleitung 10 in Strömungsverbindung, die an eine nicht gezeigte Saugpumpe angeschlossen ist.

Die Lagerung der drehend antreibbaren Saugwalze 6, 24 erfolgt an ihrem in Fig. 1 gezeigten Ende mit Hilfe ihres Wellenzapfens 11. Der Wellenzapfen 11 ist bei der gezeigten Ausführungsform mit Hilfe eines Kugellagers 12 in einem buchsenartig ausgebildeten Verbindungsteil 5 gelagert. Das Verbindungsteil 5 weist einen Flansch 13 auf, mit dessen Hilfe es mit einem in strichpunktierten Linien angedeuteten Gestellrahmen 7 der Maschine verschraubt werden kann. Ein mit dem Verbindungsteil 5 verschraubter Deckel 14 sichert das Kugellager 12 in dem Verbindungsteil 5.

Auf dem Wellenzapfen 11 sitzt eine Schiebebuchse 15, auf welcher zwei Dichtungsringe 16 und 17 gehaltert sind. Wie zu erkennen ist, dichten die Dichtungsringe 16 und 17 den das Kugellager 12 enthaltenden Innenraum des Verbindungsteils 5 zu derjenigen Seite hin ab, auf der sich das Saugluftsteuerventil 1 befindet.

Bei der gezeigten Ausführungsform sitzt eine Lagerbuchse 4 in der Axialrichtung A der Saugwalze 6 axial verschiebbar auf einem Schiebelagersitz, der am linken Ende des Verbindungsteils 5 ausgebildet ist. Mittels wenigstens einer Befestigungsschraube 18 ist eine Halteplatte 3 an der Lagerbuchse 4 befestigt. Mittels wenigstens einer Befestigungsschraube 19, die in der Halteplatte 3 versenkt angeordnet ist, ist die Halteplatte 3 an dem Saugluftsteuerventil 1 befestigt, wobei die wenigstens eine Befestigungsschraube 19 eine die Dicke D aufweidende Passplatte 2 durchsetzt, die zwischen dem Saugluftsteuerventil 1 und der Halteplatte 3 angeordnet ist. Das Saugluftsteuerventil 1 besteht in an sich bekannter Weise aus Kunststoff oder Metall. Die wenigstens eine Befestigungsschraube 19 durchgreift zumindest im Fall der Herstellung des Saugluftsteuerventils 1 aus Kunststoff ein Durchgangsloch in der Wandung des Saugluftsteuerventils 1 und greift in eine Gewindebohrung ein, die sich in einer Mutterplatte 20 befindet, welche in dem Saugluftsteuerkanal 8 angeordnet ist.

Die Lagerbuchse 4 trägt somit die Halteplatte 3, die Passplatte 2 und das Saugluftsteuerventil 1. Ein Verschieben der Lagerbuchse 4 in Axialrichtung A bewirkt folglich eine entsprechende Verschiebung der Halteplatte 3, der Passplatte 2 und des Saugluftsteuerventils 1.

Die Lagerbuchse 4 ist mittels wenigstens einer Fixierschraube 21 derart axial an dem Verbindungsteil 5 fixierbar, dass sie sich in der Axialrichtung A nicht mehr verschieben lässt. Hierzu greift die wenigstens eine Fixierschraube 21 in wenigstens eine in Fig. 1 angedeutete Gewindebohrung ein, die in Radialrichtung verlaufend in dem Verbindungsteil 5 vorgesehen ist. Darüber hinaus weist die Lagerbuchse 4 wenigstens eine Radialbohrung 22 auf, deren Durchmesser wesentlich größer ist als der Schaftdurchmesser der Fixierschraube 21. Alternativ ist denkbar, in der Lagerbuchse 4 ein in Axialrichtung A verlaufendes Langloch oder einen in Fig. 1 nach rechts offenen Schlitz vorzusehen, dessen Länge dem Durchmesser der Radialbohrung 22 entspricht. Ein Unterlegelement 23 ermöglicht es, dass sich der Kopf der Fixierschraube 21 an der Lagerbuchse 4 abstützen kann.

Zum Fixieren der Lagerbuchse 4 wird die wenigstens eine Fixierschraube 21 angezogen bis ein hinreichender Reibschluss zwischen der Lagerbuchse 4 und dem Verbindungsteil 5 entsteht, der ein Verschieben der Lagerbuchse 4 in Axialrichtung A nicht mehr erlaubt. Zum Lösen der Fixierung ist es nicht erforderlich, die Fixierschraube 21 vollständig aus der Gewindebohrung in dem Verbindungsteil 5 herauszudrehen, sondern sie lediglich soweit zu lösen, bis kein wesentlicher Reibschluss mehr zwischen der Lagerbuchse 4 und dem Verbindungsteil 5 vorhanden ist. Bei nicht vorhandener Fixierung kann die Lagerbuchse 4 in Axialrichtung A verschoben werden, wobei sie sich im Rahmen des Übermaßes des Durchmessers der Radialbohrung 22 gegenüber dem Durchmesser des Schaftes der Fixierschraube 21 relativ zu dem Verbindungsteil 5 bewegen kann.

Die Lagerbuchse 4, die Halteplatte 3, die Passplatte 2 und das Saugluftsteuerventil 1 weisen in der Aufsicht, d. h. in Fig. 1 von rechts, im Wesentlichen eine Hufeisenform der Art auf, dass sie ohne den vollständigen Ausbau der Saugwalze 6, 24 aus dem Gestellrahmen 7 von dem Verbindungsteil 5 demontiert werden können. Es sei darauf hingewiesen, dass auch beliebige andere nicht geschlossen umlaufende Formen denkbar sind, die eine Demontage der Lagerbuchse 4, der Halteplatte 3, der Passplatte 2 und des Saugluftsteuerventils 1 von dem Verbindungsteil 5 ohne den Ausbau der Saugwalze 6, 24 aus dem Gestellrahmen 7 ermöglichen.

Bei der gezeigten Ausführungsform besteht die Passplatte 2 aus einem schälbaren Schichtblech, das aus mehreren geschichteten Metallfolien mit vorzugsweise jeweils gleicher Dicke besteht und beispielsweise unter dem Handelnamen "Laminum" bei der Georg Martin GmbH in 63128 Dietzenbach erhältlich ist. Die einzelnen Metallfolien des Schichtblechs weisen beispielsweise eine Dicke von jeweils 0,05 mm auf und können einzeln von dem Schichtblech abgeschält bzw. abgezogen werden. Auf diese Weise weist die Passplatte 2 eine in Stufen der Dicke einer Metallfolie veränderbare Dicke D auf.

Im Folgenden wird die erfindungsgemäße Verfahrensweise zum Einstellen der Breite B des Saugspaltes S auf eine Sollbreite beschrieben, die der Dicke einer Metallfolie der als Schichtblech ausgebildeten Passplatte 2 entspricht:
Zunächst werden die Lagerbuchse 4, die Halteplatte 3, die Passplatte 2 und das Saugluftsteuerventil 1 mit Hilfe der Befestigungsschrauben 18 und 19 aneinander befestigt. Diese Baugruppe wird dann durch Montage der Lagerbuchse 4 auf dem Schiebelagersitz des Verbindungsteils 5 an letzterem montiert. Dabei greift die wenigstens eine Fixierschraube 21 zwar in die ihr zugeordnete Gewindebohrung in dem Verbindungsteil 5 ein, jedoch ist sie noch nicht angezogen, so dass die Lagerbuchse 4 und mit ihr die gesamte Baugruppe in Axialrichtung A verschiebbar ist. Alternativ ist es möglich, zunächst nur die Lagerbuchse 4 an dem Verbindungsteil 5 zu montieren und anschließend die vormontierte Einheit aus Halteplatte 3, Passplatte 2 und Saugluftsteuerventil 1 an der Lagerbuchse 4 zu befestigen.

Die Baugruppe umfassend die Lagerbuchse 4, die Halteplatte 3, die Passplatte 2 und das Saugluftsteuerventil 1 wird anschließend in Fig. 1 nach links verschoben, bis die in Fig. 1 linke Stirnseite des Saugluftsteuerventils 1 spielfrei an der in Fig. 1 rechten Stirnseite der Walzenscheibe 24 anliegt. In diesem Zustand wird die wenigstens eine Fixierschraube 21 angezogen, so dass die Lagerbuchse 4 in Axialrichtung A fixiert ist und nicht mehr verschoben werden kann.

Daraufhin wird die wenigstens eine Befestigungsschraube 18 gelöst und die Einheit bestehend aus der Halteplatte 3, der Passplatte 2 und dem Saugluftsteuerventil 1 wird in Radialrichtung aus dem Zwischenraum zwischen der Lagerbuchse 4 und der Saugwalze 6, 24 herausgezogen. Dann wird die Einheit durch Lösen der wenigstens einen Befestigungsschraube 19 derart auseinander genommen, dass die Passplatte 2 zugänglich ist. Dabei besteht die Möglichkeit, die Befestigungsschraube 19 nicht vollständig aus der Halteplatte 3 herauszuziehen, so dass die Passplatte 2 noch von dem Schaft der Befestigungsschraube 19 auf der Halteplatte 3 gehalten wird und vor Herunterfallen gesichert ist. Dann wird eine Metallfolie vorsichtig von der als Schichtblech ausgebildeten Passplatte 2 abgezogen. Die Dicke D der Passplatte 2 wird auf diese Weise um die Dicke der abgezogenen Metallfolie verringert.

Schließlich wird die Einheit umfassend die Halteplatte 3, die Passplatte 2 mit verringerter Dicke und das Saugluftsteuerventil 1 wieder zusammengebaut und in den Zwischenraum zwischen Lagerbuchse 4 und Saugwalze 6, 24 eingefügt. Durch Anziehen der wenigstens einen Befestigungsschraube 18 wird bewirkt, dass zwischen der Walzenscheibe 24 und dem Saugluftsteuerventil 1 ein Saugspalt S mit einer Breite B entsteht, die der Sollbreite in der Größe der Dicke der von der Passplatte 2 abgezogenen Metallfolie entspricht.

Bei der gezeigten Ausführungsform erleichtert die Halteplatte 3 das Halten sowie die Handhabung der Passplatte 2 beim Abziehen der Metallfolie. Auf diesen Vorteil kann im Rahmen der vorliegenden Erfindung ggf. auch verzichtet werden, so dass alternativ eine unmittelbare Befestigung der Passplatte 2 an der Lagerbuchse 4 möglich ist.

Die minimal einstellbare Sollbreite des Saugspaltes S hängt von der Dicke der Metallfolien des Schichtblechs ab. Dementsprechend kann die minimal einstellbare Sollbreite des Saugspaltes S durch die Wahl des Typs des als Passplatte 2 verwendeten Schichtblechs bestimmt werden.

Im Rahmen der vorliegenden Erfindung ist alternativ denkbar, sowohl auf die Halteplatte 3 als auch auf die Passplatte 2 zu verzichten. In diesem Fall kann das Saugluftsteuerventil 1 unmittelbar an der Lagerbuchse 4 befestigt werden. Die Einstellung der Breite B des Saugspaltes S auf seine Sollbreite kann dann wie folgt vorgenommen werden:

Zunächst wird ein bereit zu haltendes und in Fig. 1 nicht gezeigtes Abstandselement, dessen Dicke der Sollbreite des Saugspaltes S entspricht und bei dem es sich um eine Metallfolie, ein Blatt Papier oder ähnliches handeln kann, in den Zwischenraum zwischen der Saugwalze 6, 24 und dem Saugluftsteuerventil 1 eingebracht. Daraufhin wird die Baugruppe umfassend die Lagerbuchse 4 und das Saugluftsteuerventil 1 in Fig. 1 nach links verschoben bis das Abstandselement spielfrei in den Zwischenraum zwischen der Saugwalze 6, 24 und dem Saugluftsteuerventil 1 eingepasst ist. In diesem Zustand wird die wenigstens eine Fixierschraube 21 angezogen und die Lagerbuchse 4 dadurch in Axialrichtung A fixiert. Schließlich wird das Abstandselement aus dem Zwischenraum zwischen der Saugwalze 6, 24 und dem Saugluftsteuerventil 1 entfernt, so dass ein Saugspalt S mit der gewünschten Sollbreite entsteht.

Bei diesem Verfahren zum Einstellen der Breite B des Saugspaltes S ist es in zeitsparender Weise nicht erforderlich, eine Einheit umfassend die Halteplatte 3, die Passplatte 2 und das Saugluftsteuerventil 1 aus- und wieder einzubauen. Allerdings können sich bei dieser Verfahrensweise Nachteile aus der Notwendigkeit ergeben, ein sehr dünnes Abstandselement handzuhaben. Unabhängig davon funktioniert diese alternative Verfahrensweise natürlich auch dann, wenn sie bei der in Fig. 1 gezeigten Ausführungsform angewandt wird, d. h. bei einer Ausführungsform, die auch die Halteplatte 3 und die Passplatte 2 aufweist.

### BEZUGSZEICHENLISTE

- 1: Saugluftsteuerventil
- 2: Passplatte
- 3: Halteplatte
- 4: Lagerbuchse
- 5: Verbindungsteil
- 6: Walzenkörper
- 7: Gestellrahmen
- 8: Saugluftsteuerkanäle
- 9: Ansaugtrichter
- 10: Saugleitung
- 11: Wellenzapfen
- 12: Kugellager
- 13: Flansch
- 14: Deckel
- 15: Schiebebuchse
- 16,17: Dichtungsring
- 18,19: Befestigungsschraube
- 20: Mutterplatte
- 21: Fixierschraube
- 22: Radialbohrung
- 23: Unterlegelement
- 24: Walzenscheibe

- A: Axialrichtung
- B: Breite des Saugspaltes S
- D: Dicke der Passplatte 2
- S: Saugspalt

## Patentansprüche

1. Vorrichtung zum Einstellen der Breite (B) eines Saugspaltes (S) zwischen einer drehbaren Saugwalze (6, 24) und einem feststehenden Saugluftsteuerventil (1) zum Steuern der Beaufschlagung der Saugwalze (6, 24) mit Saug- oder Druckluft, umfassend
• eine Lagerbuchse (4), die in Axialrichtung (A) der Saugwalze (6, 24) verschiebbar und relativ zu der Saugwalze (6, 24) wenigstens in einer Betriebsstellung fixierbar ist, in welcher der Saugspalt (S) im Betrieb der Saugwalze (6, 24) eine vorgegebene Sollbreite aufweist,
• eine Passplatte (2), die eine veränderbare Dicke (D) aufweist und an der Lagerbuchse (4) befestigbar ist, und
• das Saugluftsteuerventil (1), das auf der der Lagerbuchse (4) abgewandten Seite der Passplatte (2) an der Passplatte (2) befestigbar ist,
so dass die Sollbreite des Saugspaltes (S) dadurch einstellbar ist, dass das Saugluftsteuerventil (1) mit seiner der Passplatte (2) abgewandten Seite in Anlage an die Saugwalze (6, 24) gebracht, die Lagerbuchse (4) in ihrer dann eingenommenen Lage axial fixiert und die Dicke der Passplatte (2) um die Sollbreite des Saugspaltes (S) verringert wird, wodurch die von der Lagerbuchse (4) eingenommene Lage der Betriebsstellung entspricht.

2. Vorrichtung nach Anspruch 1,
**dadurch gekennzeichnet, dass**
die Passplatte (2) ein schälbares Schichtblech ist, das aus mehreren geschichteten Metallfolien besteht.

3. Vorrichtung nach Anspruch 1 oder 2,
**dadurch gekennzeichnet, dass**
eine Halteplatte (3) vorhanden ist, die einerseits an der Lagerbuchse (4) sowie andererseits an dem Saugluftsteuerventil (1) befestigbar ist und zwischen sich und dem Saugluftsteuerventil (1) die Passplatte (2) hält.

4. Vorrichtung zum Einstellen der Breite (B) eines Saugspaltes (S) zwischen einer drehbaren Saugwalze (6, 24) und einem feststehenden Saugluftsteuerventil (1) zum Steuern der Beaufschlagung der Saugwalze (6, 24) mit Saug- oder Druckluft, umfassend
• eine Lagerbuchse (4), die in Axialrichtung (A) der Saugwalze (6, 24) verschiebbar und relativ zu der Saugwalze (6, 24) wenigstens in einer Betriebsstellung fixierbar ist, in welcher der Saugspalt (S) im Betrieb der Saugwalze (6, 24) eine vorgegebene Sollbreite aufweist, und
• das Saugluftsteuerventil (1), das an der Lagerbuchse (4) befestigbar ist,
so dass die Sollbreite des Saugspaltes (S) dadurch einstellbar ist, dass zwischen der Saugwalze (6, 24) und dem Saugiuftsteuerventil (1) ein Abstandselement, das eine der Sollbreite entsprechende Dicke aufweist, spielfrei eingepasst, die Lagerbuchse (4) in ihrer dann eingenommenen Lage axial fixiert und das Abstandselement entfernt wird, wodurch die von der Lagerbuchse (4) eingenommene Lage der Betriebsstellung entspricht.

5. Vorrichtung nach einem der vorangehenden Ansprüche,
**dadurch gekennzeichnet, dass**
die Lagerbuchse (4) axial verschiebbar auf einem Verbindungsteil (5) gelagert ist, welches einerseits in einem Gestellrahmen (7) halterbar und in welchem andererseits die Saugwalze (6, 24) drehbar lagerbar ist.

6. Verfahren zum Einstellen der Breite (B) eines Saugspaltes (S) zwischen einer drehbaren Saugwalze (6, 24) und einem feststehenden Saugluftsteuerventil (1) zum Steuern der Beaufschlagung der Saugwalze (6, 24) mit Saug- oder Druckluft auf eine vorgegebene Sollbreite unter Verwendung einer Vorrichtung mit
• einer Lagerbuchse (4), die in Axialrichtung (A) der Saugwalze (6, 24) verschiebbar ist,
• einer Passplatte (2), die eine veränderbare Dicke (D) aufweist und an der Lagerbuchse (4) befestigbar ist, und
• dem Saugluftsteuerventil (1), das auf der der Lagerbuchse (4) abgewandten Seite der Passplatte (2) an der Passplatte (2) befestigbar ist,
umfassend folgende Schritte:
• Befestigen der Lagerbuchse (4), der Passplatte (2) und des Saugluftsteuerventils (1) aneinander, so dass eine aus ihnen bestehende Baugruppe entsteht,
• Herstellen einer spielfreien Anlage des Saugluftsteuerventils (1) mit seiner der Passplatte (2) abgewandten Seite an der Saugwalze (6, 24) durch axiales Verschieben der Baugruppe in Richtung Saugwalze (6, 24),
• axiales Fixieren der Lagerbuchse (4) derart, dass sie nicht mehr verschiebbar ist,
• Demontieren der Baugruppe und Entfernen der Passplatte (2) sowie des Saugluftsteuerventils (1),
• Verringern der Dicke der Passplatte (2) um die Sollbreite des Saugspaltes (S), und
• Montage der Baugruppe durch Einbauen der Passplatte (2) mit verringerter Dicke und des Saugluftsteuerventils (1),
so dass zwischen der Saugwalze (6, 24) und dem Saugluftsteuerventil (1) der Saugspalt (S) mit der Sollbreite entsteht.

7. Verfahren nach Anspruch 6,
**dadurch gekennzeichnet, dass**
die Passplatte (2) von einem schälbaren Schichtblech aus mehreren geschichteten Metallfolien gebildet wird und das Verringern der Dicke der Passplatte (2) um die Sollbreite des Saugspaltes (S) durch Entfernen wenigstens einer Metallfolie erfolgt.

8. Verfahren zum Einstellen der Breite (B) eines Saugspaltes (S) zwischen einer drehbaren Saugwalze (6, 24) und einem feststehenden Saugluftsteuerventil (1) zum Steuern der Beaufschlagung der Saugwalze (6) mit Saug- oder Druckluft auf eine vorgegebene Sollbreite unter Verwendung einer Vorrichtung mit
• einer Lagerbuchse (4), die in Axialrichtung (A) der Saugwalze (6, 24) verschiebbar ist, und
• dem Saugluftsteuerventil (1), das an der Lagerbuchse (4) befestigbar ist, umfassend folgende Schritte:
• Befestigen der Lagerbuchse (4) und des Saugluftsteuerventils (1) aneinander, so dass eine aus ihnen bestehende Baugruppe entsteht,
• Spielfreies Einpassen eines Abstandselementes, das eine der Sollbreite entsprechende Dicke aufweist, zwischen der Saugwalze (6, 24) und dem Saugluftsteuerventil (1) durch axiales Verschieben der Baugruppe in Richtung Saugwalze (6, 24),
• Axiales Fixieren der Lagerbuchse (4) derart, dass sie nicht mehr verschiebbar ist, und
• Entfernen des Abstandselementes aus dem Saugspalt (S),
so dass zwischen der Saugwalze (6, 24) und dem Saugluftsteuerventil (1) der Saugspalt (S) mit der Sollbreite entsteht.

## Claims

1. Device for adjusting the width (B) of a suction gap (S) between a rotatable suction roller (6, 24) and a stationary suction air control valve (1) for controlling the suction or pressurised air applied to the suction roller (6, 24), comprising:
• a bearing bush (4) which is displaceable in the axial direction (A) of the suction roller (6, 24) and can be fixed relative to the suction roller (6, 24) at least in an operating position in which the suction gap (S) has a predefined desired width during operation of the suction roller (6, 24),
• an adjusting plate (2) which has a variable thickness (D) and can be affixed to the bearing bush (4), and
• the suction air control valve (1), which can be affixed to the fitting plate (2) on the side of the adjusting plate (2) facing away from the bearing bush (4),
so that the desired width of the suction gap (S) can be adjusted by moving the suction air control valve (1) so that its side facing away from the adjusting plate (2) sits in abutment with the suction roller (6, 24), axially fixing the bearing bush (4) in the position it has then assumed and reducing the thickness of the adjusting plate (2) by the desired width of the suction gap (S), as a result of which the position assumed by the bearing bush (4) corresponds to the operating position.

2. Device as claimed in claim 1,
**characterised in that**
the adjusting plate (2) is a peelable laminated metal plate comprising several laminated metal foils.

3. Device as claimed in claim 1 or 2,
**characterised in that**
a retaining plate (3) is provided, which can be affixed to the bearing bush (4) on the one hand and to the suction air control valve (1) on the other hand and retains the adjusting plate (32) between itself and the suction air control valve (1).

4. Device for adjusting the width (B) of a suction gap (S) between a rotatable suction roller (6, 24) and a stationary suction air control valve (1) for controlling the suction or compressed air applied to the suction roller (6, 24), comprising
• a bearing bush (4) which is displaceable in the axial direction (A) of the suction roller (6, 24) and can be fixed relative to the suction roller (6, 24) at least in an operating position in which the suction gap (S) has a predefined desired width during operation of the suction roller (6, 24), and
• the suction air control valve (1) which can be affixed to the bearing bush (4) so that the desired width of the suction gap (S) can be adjusted by fitting a spacer element having a thickness corresponding to the desired width between the suction roller (6, 24) and the suction air control valve (1) without any clearance, axially fixing the bearing bush (4) in the position which it has then assumed and removing the spacer element, as a result of which the position assumed by the bearing bush (4) corresponds to the operating position.

5. Device as claimed in one of the preceding claims,
**characterised in that**
the bearing bush (4) is mounted so as to be axially displaceable on a connecting part (5) which can be retained in a clamping frame (7) on the one hand and in which the suction roller (6, 24) can be rotatably mounted on the other hand.

6. Method of adjusting the width (B) of a suction gap (S) between a rotatable suction roller (6, 24) and a stationary suction air control valve (1) for controlling the suction or pressurised air applied to the suction roller (6, 24) to a predefined desired width using a device comprising
• a bearing bush (4) which is displaceable in the axial direction (A) of the suction roller (6, 24),
• an adjusting plate (2) which has a variable thickness (D) and can be affixed to the bearing bush (4), and
• the suction air control valve (1), which can be affixed to the adjusting plate (2) on the side of the adjusting plate (2) facing away from the bearing bush (4),
comprising the following steps:
• affixing the bearing bush (4), adjusting plate (2) and suction air control valve (1) to one another so as to create a unit comprising them,
• producing a clearance-free abutment of the suction air control valve (1) on the suction roller (6, 24) by its side facing away from the adjusting plate (2) by axially displacing the unit in the direction of the suction roller (6, 24),
• axially fixing the bearing bush (4) so that it is no longer displaceable,
• dismantling the unit and removing the adjusting plate (2) as well as the suction air control valve (1),
• reducing the thickness of the adjusting plate (2) by the desired width of the suction gap (S), and
• assembling the unit by fitting the adjusting plate (2) with reduced thickness and the suction air control valve (1),
thereby creating the suction gap (S) with the desired width between the suction roller (6, 24) and the suction air control valve (1).

7. Method as claimed in claim 6,
**characterised in that**
the adjusting plate (2) is provided in the form of a peelable laminated metal plate comprising several laminated metal foils and the thickness of the adjusting plate (2) is reduced by the desired width of the suction gap (S) by removing at least one metal foil.

8. Method of adjusting the width (B) of a suction gap (S) between a rotatable suction roller (6, 24) and a stationary suction air control valve (1) for controlling the suction or pressurised air applied to the suction roller (6) to a predefined desired width using a device comprising
• a bearing bush (4) which is displaceable in the axial direction (A) of the suction roller (6, 24), and
• the suction air control valve (1), which can be affixed to the bearing bush (4),
comprising the following steps:
• affixing the bearing bush (4) and suction air control valve (1) to one another so as to create a unit comprising them,
• fitting a spacer element having a thickness corresponding to the desired width between the suction roller (6, 24) and the suction air control valve (1) without any clearance by axially displacing the unit in the direction of the suction roller (6, 24),
• axially fixing the bearing bush (4) so that it is no longer displaceable, and
• removing the spacer element from the suction gap (S),
thereby creating the suction gap (S) with the desired width between the suction roller (6, 24) and the suction air control valve (1).

## Revendications

1. Dispositif servant à régler la largeur (B) d'une colonne d'aspiration (S) entre un cylindre d'aspiration (6, 24) rotatif et une soupape de commande d'air aspiré (1) fixe afin de soumettre de manière contrôlée le cylindre d'aspiration (6, 24) à l'action de l'air aspiré ou de l'air comprimé, comprenant,
- un coussinet de palier (4), qui peut être fixé de manière à pouvoir être déplacé dans la direction axiale (A) du cylindre d'aspiration (6, 24) et par rapport au cylindre d'aspiration (6, 24) au moins dans une position de marche, dans lequel la colonne d'aspiration (S) présente une largeur de consigne prédéfinie lorsque le cylindre d'aspiration (6, 24) fonctionne,
- un panneau d'adaptation (2), qui présente une épaisseur variable (D) et qui peut être fixé au niveau du coussinet de palier (4), et
- la soupape de commande d'air aspiré (1), qui peut être fixée au niveau du panneau d'adaptation (2), sur le côté dudit panneau d'adaptation (2), opposé au coussinet de palier (4),
de sorte que la largeur de consigne de la colonne d'aspiration (S) peut être ajustée en ce que la soupape de commande d'air aspiré (1) est amenée en appui au niveau du cylindre d'aspiration (6, 24) par son côté opposé au panneau d'adaptation (2), que le coussinet de palier (4) est fixé axialement dans sa position prise alors et que l'épaisseur du panneau d'adaptation (2) est diminuée de la largeur de consigne de la colonne d'aspiration (S), ce qui permet de faire correspondre la position prise par le coussinet de palier (4) à la position de marche.

2. Dispositif selon la revendication 1,
**caractérisé en ce que**
le panneau d'adaptation (2) est une tôle stratifiée pelable, qui est constituée d'un empilement de plusieurs feuilles métalliques.

3. Dispositif selon la revendication 1 ou 2,
**caractérisé en ce**
**qu'**un panneau de maintien (3) est présent, lequel peut être fixé d'un côté au niveau du coussinet de palier (4) ainsi que de l'autre côté au niveau de la soupape de commande d'air aspiré (1) et qui maintient entre lui-même et la soupape de commande d'air aspiré (1) le panneau d'adaptation (2).

4. Dispositif servant à ajuster la largeur (B) d'une colonne d'aspiration (S) entre un cylindre d'aspiration (6, 24) rotatif et une soupape de commande d'air aspiré (1) fixe afin de soumettre de manière contrôlée le cylindre d'aspiration (6, 24) à l'action de l'air aspiré ou de l'air comprimé, comprenant
- un coussinet de palier (4), qui peut être fixé de manière à pouvoir être déplacé dans la direction axiale (A) du cylindre d'aspiration (6, 24) et par rapport au cylindre d'aspiration (6, 24) au moins dans une position de marche, dans laquelle la colonne d'aspiration (S) présente une largeur de consigne prédéfinie lorsque le cylindre d'aspiration (6, 24) fonctionne, et
- la soupape de commande d'air aspiré (1), qui peut être fixée au niveau du coussinet de palier (4) de sorte que la largeur de consigne de la colonne d'aspiration (S) peut être ajustée en ce qu'un élément d'écartement présentant une épaisseur correspondant à la largeur de consigne est encastré sans jeu entre le cylindre d'aspiration (6, 24) et la soupape de commande d'air aspiré (1), que le coussinet de palier (4) est fixé axialement dans sa position alors prise et que l'élément d'écartement est retiré, ce qui permet de faire correspondre la position prise par le coussinet de palier (4) à la position de marche.

5. Dispositif selon l'une quelconque des revendications précédentes,
**caractérisé en ce**
**que** le coussinet de palier (4) est logé sur la partie d'assemblage (5) de manière à pouvoir se déplacer axialement, laquelle partie d'assemblage peut être d'une part maintenue dans un châssis (7) et dans laquelle d'autre part le cylindre d'aspiration (6, 24) peut être logé de manière à pouvoir tourner.

6. Procédé servant à ajuster sur une largeur de consigne prédéfinie la largeur (B) d'une colonne d'aspiration (S) entre un cylindre d'aspiration (6, 24) rotatif et une soupape de commande d'air aspiré (1) fixe afin de soumettre de manière contrôlée le cylindre d'aspiration (6, 24) à l'action de l'air aspiré ou de l'air comprimé, en utilisant un dispositif doté
- d'un coussinet de palier (4), qui peut être déplacé dans la direction axiale (A) du cylindre d'aspiration (6, 24),
- d'un panneau d'adaptation (2), qui présente une épaisseur (D) variable et qui peut être fixé au niveau du coussinet de palier (4), et
- de la soupape de commande d'air aspiré (1), qui peut être fixée au niveau du panneau d'adaptation (2), sur le côté dudit panneau d'adaptation (2), opposé au coussinet de palier (4),
comprenant les étapes suivantes pour :
- fixer le coussinet de palier (4), le panneau d'adaptation (2) et la soupape de commande d'air aspiré (1) les uns aux autres de manière à obtenir un module constitué de ces éléments ;
- établir un agencement sans jeu de la soupape de commande d'air aspiré (1) par son côté opposé au panneau d'adaptation (2) au niveau du cylindre d'aspiration (6, 24) en déplaçant axialement par glissement le module dans la direction du cylindre d'aspiration (6, 24),
- fixer de manière axiale le coussinet de palier (4) de telle manière qu'il ne puisse plus être déplacé,
- démonter le module et retirer le panneau d'adaptation (2) ainsi que la soupape de commande d'air aspiré (1),
- réduire l'épaisseur du panneau d'adaptation (2) de la valeur de la largeur de consigne de la colonne d'aspiration (S), et
- monter le module en installant le panneau d'adaptation (2) présentant une épaisseur réduite et en installant la soupape de commande d'air aspiré (1),
de manière à obtenir entre le cylindre d'aspiration (6, 24) et la soupape de commande d'air aspiré (1), la colonne d'aspiration (S) présentant la largeur de consigne.

7. Procédé selon la revendication 6,
**caractérisé en ce**
**que** le panneau d'adaptation (2) est formé par une tôle stratifiée pelable constituée d'un empilement de plusieurs feuilles métalliques, et en ce que la réduction de l'épaisseur du panneau d'adaptation (2) de la valeur de la largeur de consigne de la colonne d'aspiration (S) se fait en retirant au moins une feuille métallique.

8. Procédé servant à ajuster sur une largeur de consigne prédéfinie la largeur (B) d'une colonne d'aspiration (S) entre un cylindre d'aspiration (6, 24) rotatif et une soupape de commande d'air aspiré (1) fixe afin de soumettre de manière contrôlée le cylindre d'aspiration (6) à l'action de l'air aspiré ou de l'air comprimé, en utilisant un dispositif doté
- d'un coussinet de palier (4), qui peut être déplacé dans la direction axiale (A) du cylindre d'aspiration (6, 24), et
- de la soupape de commande d'air aspiré (1), qui peut être fixée au niveau du coussinet de palier (4), comprenant les étapes suivantes pour :
- fixer le coussinet de palier (4) et la soupape de commande d'air aspiré (1) l'un à l'autre, de manière à obtenir un module constitué desdits éléments,
- encastrer sans jeu un élément d'écartement, qui présente une épaisseur correspondant à la largeur de consigne, entre le cylindre d'aspiration (6, 24) et la soupape de commande d'air aspiré (1) en déplaçant axialement par glissement le module en direction du cylindre d'aspiration (6, 24),
- fixer de manière axiale le coussinet de palier (4) de telle manière qu'il ne puisse plus être déplacé, et
- retirer l'élément d'écartement de la colonne d'aspiration (S),
de manière à obtenir entre le cylindre d'aspiration (6, 24) et la soupape de commande d'air aspiré (1), la colonne d'aspiration (S) présentant la largeur de consigne.
